# FASCICULE DE BREVET EUROPEEN

(11) **EP 3 315 377 B1**
(45) Date de publication et mention de la délivrance du brevet: **16.12.2020**
(21) Numéro de dépôt: 17199041.9
(22) Date de dépôt: 27.10.2017
(51) Int. Cl.: B61D 17/04

(54) **STRUCTURE DE CAISSE POUR UN VÉHICULE SUR RAILS ET PROCÉDÉ DE FABRICATION D'UNE TELLE STRUCTURE DE CAISSE**
KAROSSERIESTRUKTUR FÜR EIN FAHRZEUG AUF SCHIENEN, UND HERSTELLUNGSVERFAHREN EINER SOLCHEN KAROSSERIESTRUKTUR
BODYWORK STRUCTURE FOR A VEHICLE ON RAILS AND METHOD FOR MANUFACTURING SUCH A BODYWORK STRUCTURE

(30) Priorité: 27.10.2016 FR 1660451
(43) Date de publication de la demande: 02.05.2018
(73) Titulaire: ALSTOM Transport Technologies, 93400 Saint-Ouen (FR)
(72) Inventeur: ROLL, Stephane, 67170 Brumath (FR); DELPHIGUE, Bruno, 27000 Evreux (FR)
(74) Mandataire: Lavoix

(56) Documents cités:
- EP-A2- 0 392 828
- WO-A1-2013/164294
- DE-A1- 3 309 736
- FR-A1- 2 630 698
- JP-A- 2003 275 876
- US-A1- 2005 120 535

## Description

La présente invention concerne une structure de caisse pour un véhicule sur rails et un procédé de fabrication d'une telle structure de caisse.

Pour réaliser une structure de caisse d'un véhicule ferroviaire, telle qu'une voiture ou un wagon, il est connu d'assembler des éléments réalisés avec des matériaux métalliques différents, afin d'optimiser le poids de la caisse. En particulier, les planchers de la structure peuvent être réalisés en aluminium, alors que d'autres pièces comme les brancards de support des planchers sont réalisés en acier. Afin de garantir la solidité et la longévité de la structure, il est préférable de solidariser entre eux les différents éléments qui la composent par soudage. Or, le soudage d'éléments en acier avec des éléments en aluminium nécessite des précautions particulières, dans la mesure où ces matériaux sont difficiles à souder entre eux et ont tendance à générer une corrosion galvanique lorsqu'ils sont mis en contact.

FR-A1-2 630 698 décrit une voiture, pourvue d'une caisse dont la structure comporte deux niveaux de plancher, formés par des plaques en aluminium filé, et des faces, constituées de montants verticaux et de longrines en acier, conçues pour supporter ces deux niveaux de planchers. Des éléments composites sont prévus pour permettre la fixation des planchers aux faces. Chacun de ces éléments composites comprend une partie en aluminium, qui est soudée à l'un des planchers, et une partie en acier, qui est soudée à l'une des faces en acier.

Pour fabriquer les éléments composites, il est connu de solidariser la partie en aluminium et la partie en acier à l'aide d'éléments de fixation (boulon, rivet, etc.) ou à l'aide d'un soudage par explosion, ce qui peut s'avérer onéreux et complexe. De plus, du fait de son mode de mise en œuvre particulier, cette soudure par explosion est généralement réalisée à l'avance, séparément des autres étapes d'assemblage de la structure. A cela s'ajoute la nécessité de souder l'élément composite aux planchers, avec une soudure aluminium sur aluminium, et aux faces, avec une soudure acier sur acier. En conséquence, un total de trois technologies de soudage différentes est nécessaire pour assembler les planchers en aluminium avec les faces en acier.

En conséquence, l'invention vise à porter remède aux inconvénients de l'art antérieur susmentionnés et propose une nouvelle structure de caisse dont la fabrication est plus facile et moins onéreuse, cette nouvelle structure de caisse n'étant pas moins solide et durable que les structures connues.

L'invention a pour objet une structure de caisse pour un véhicule sur rails, la structure de caisse comprenant :
- un châssis, qui comprend au moins un élément de support réalisé au moins majoritairement en alliage d'acier, et
- au moins un élément d'équipement, réalisé au moins majoritairement en alliage d'aluminium, qui comprend au moins une première plaque présentant au moins un bord longitudinal et une première face délimitée par le bord longitudinal,

Selon l'invention, la structure de caisse comprend en outre au moins une latte longitudinale en alliage d'acier, laquelle est solidaire de l'élément de support, la latte longitudinale étant fixée à plat sur la première face, à l'aide d'une soudure par friction-fusion.

Grâce à l'invention, l'élément d'équipement est fixé à l'élément de support à l'aide d'un nombre minimal de pièces intermédiaires et de soudures. Le soudage par friction-fusion, qui est une technique récente et performante décrite par exemple dans EP-A1-2 844 415, peut avantageusement être mis en œuvre directement au cours de la fabrication de la structure de caisse de l'invention. En effet, ce soudage par friction-fusion (traduit de l'anglais « Friction melt bonding ») peut être effectué par application d'un outil tournant de friction-fusion sur une face libre de la latte longitudinale, la face libre étant opposée à une face en appui contre la première face. Le soudage par friction-fusion est ainsi effectué par conduction au travers de la latte longitudinale métallique pour fixer cette dernière sur l'élément d'équipement situé en dessous. La structure de caisse obtenue est particulièrement solide, durable et peu onéreuse.

Selon d'autres caractéristiques avantageuses de l'invention, prises isolément ou en combinaison :
- Un méplat longitudinal est ménagé dans la première face, sur une partie seulement de cette première face s'étendant à partir du bord longitudinal, la latte longitudinale étant fixée sur l'élément d'équipement à plat contre le méplat longitudinal.
- Deux plaques sont prévues, dont la première plaque, qui comprend une deuxième face opposée à la première face, et dont une deuxième plaque parallèle à la première plaque, et l'élément d'équipement comprend une âme longitudinale, qui fait saillie à partir d'une partie latérale de la deuxième face, la partie latérale s'étendant à partir du bord longitudinal et étant en regard avec la latte longitudinale, l'âme reliant la première plaque à la deuxième plaque.
- La latte longitudinale vient de matière avec l'élément de support, et appartient à ce dernier.
- La latte longitudinale présente un bord externe longitudinal par l'intermédiaire duquel la latte longitudinale est soudée sur l'élément de support.
- La latte longitudinale présente une partie en surépaisseur qui s'étend à partir du bord externe longitudinal.
- La latte longitudinale présente un bord interne longitudinal chanfreiné, la structure de caisse comprenant une garniture d'étanchéité rapportée contre le bord interne longitudinal.
- L'élément de support forme un brancard et l'élément d'équipement forme un plancher.

L'invention a également pour objet un procédé de fabrication d'une structure de caisse conforme à ce qui précède, ce procédé de fabrication comprenant une étape de fixation de la latte longitudinale sur la première face par soudage par friction-fusion effectué au travers de la latte longitudinale par application d'un outil tournant de friction-fusion sur une face libre de la latte longitudinale, la face libre étant opposée à une face d'appui de la latte longitudinale contre la première face.

Enfin, selon une autre caractéristique avantageuse de l'invention, l'outil de friction-fusion est appliqué sur la face libre en regard de la première face, en dépassant au-delà du bord longitudinal.

L'invention sera mieux comprise à la lecture de la description qui va suivre, donnée uniquement à titre d'exemple non limitatif et non exhaustif et faite en se référant aux dessins dans lesquels :
- La figure 1 est une coupe transversale partielle d'une structure de caisse conforme à un premier mode de réalisation de l'invention ;
- La figure 2 est une vue à plus grande échelle du détail II à la figure 1, et
- La figure 3 est une coupe transversale partielle d'une structure de caisse conforme à un deuxième mode de réalisation de l'invention.

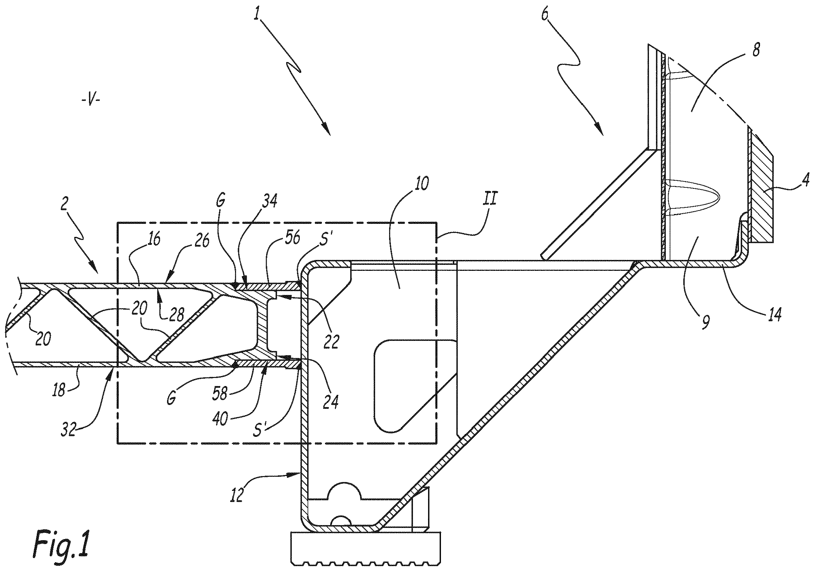

Dans ce qui suit, le plan de coupe des figures 1 à 3 est nommé « plan transversal », de sorte que les termes « longitudinal » et « longueur » désignent une direction orthogonale, ou pour le moins sécante, à ce plan transversal. Par ailleurs, les termes « supérieur » et « haut » désignent une direction transversale orientée vers le haut des figures 1 à 3, les termes « inférieur » et « bas » désignant une direction transversale opposée. Enfin, les termes « horizontal » et « vertical » désignent des directions respectivement horizontales et verticales en conditions normales d'utilisation du véhicule, lorsque ce dernier repose sur des rails : en l'espèce, la direction horizontale est représentée horizontalement aux figures, la direction verticale étant représentée verticalement.

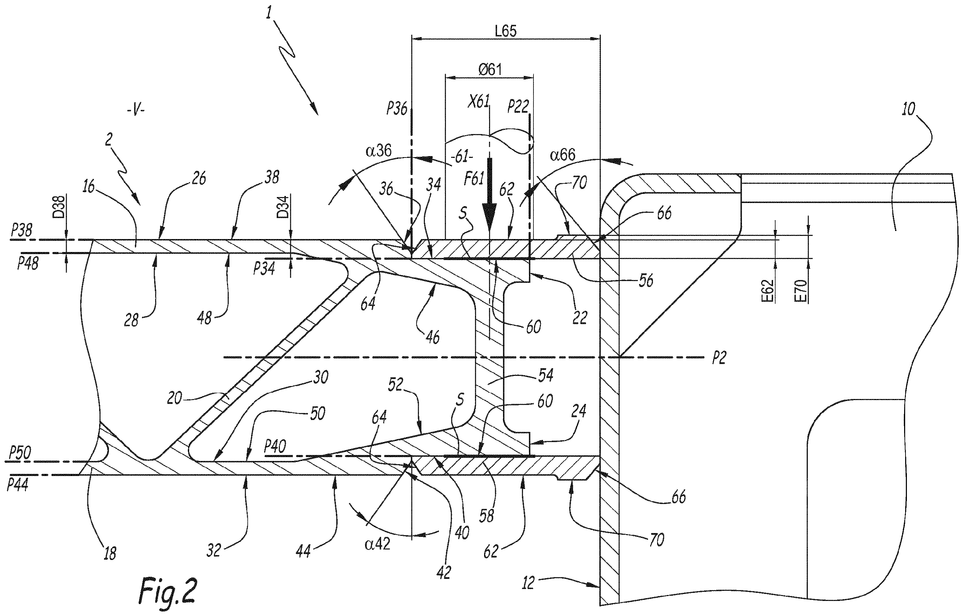

La structure 1 des figures 1 et 2 appartient à une caisse d'un véhicule sur rails, du genre wagon, voiture ou locomotive, destiné par exemple à entrer dans la composition d'un train.

Le terme « caisse » désigne la partie supérieure du véhicule, reposant sur des bogies du véhicule. La caisse est destinée à contenir des personnes ou des marchandises transportées par le véhicule ou un ensemble de traction dans le cas d'une locomotive. De manière classique, la caisse comprend au moins un plancher 2 horizontal et des parois latérales 4, dont une seule est partiellement visible sur la figure 1, qui s'élèvent à partir du plancher 2 afin de délimiter un volume intérieur V de la caisse. En variante, plusieurs planchers peuvent être prévus afin de former des niveaux au sein de la caisse. La caisse comporte de préférence un toit ou un pavillon, non représenté, fermant le volume V par le dessus, et des éléments d'habillage intérieurs et extérieurs, également non représentés. Le plancher 2, les parois latérales 4 et le toit constituent ainsi des éléments d'équipement de la structure 1.

La structure 1 comprend également un châssis 6, formé en majorité par un assemblage d'éléments de support, du genre poutres et montants. De préférence, la plupart des éléments de support sont réalisés au moins majoritairement, voire totalement, en acier ou en alliage d'acier, pour conférer au châssis 6 une résistance mécanique prédéterminée en fonction des conditions d'utilisation du véhicule. Par majoritairement, on entend que plus de 50% en poids de chaque élément de support est en acier ou en alliage d'acier. De préférence, au moins la majorité des éléments de support forment des profilés métalliques. Les éléments de support sont assemblés les uns avec les autres par soudage, rivetage, boulonnage, ou tout autre technique appropriée. Le châssis 6 constitue donc une ossature rigide, qui a notamment pour but de supporter les éléments d'équipement, dont le plancher 2 et les parois latérales 4.

Avantageusement, deux rangées longitudinales de montants verticaux 8 forment des éléments de support des parois latérales 4 de la caisse.

Le châssis 6 inclut également au moins deux brancards 10, dont un seul est visible aux figures 1 et 2, formant chacun une poutre longitudinale du châssis 6. Chacun des brancards 10 relie les montants verticaux 8 de l'une des rangées longitudinales entre eux, en étant soudé à ces montants verticaux 8. Chaque brancard 10 est réalisé en acier, ou en alliage d'acier, au moins majoritairement, et de préférence totalement. Chaque brancard 10 est formé de préférence par un profilé, c'est-à-dire une pièce obtenue par extrusion de matière, ou est formé par un assemblage de profilés fixés entre eux. Les brancards 10 sont disposés à la même hauteur, entre les deux rangées de montants verticaux 8 et forment des éléments de support du plancher 2 de la structure 1.

En particulier, chaque brancard 10 présente une surface de fixation 12 plane et orientée selon un plan longitudinal parallèle aux parois 4. Chaque surface de fixation 12 est tournée vers l'intérieur de la caisse, de sorte que les deux surfaces de fixation 12 se font face.

Chaque brancard 10 comprend également, de préférence, une partie 14 conformée pour accueillir une extrémité inférieure 9 des montants verticaux 8, à l'opposé de la surface de fixation 12.

Le plancher 2 comprend quant à lui un profilé au moins majoritairement, voire totalement, en aluminium ou en alliage d'aluminium, de sorte qu'il est particulièrement facile à fabriquer et comprend un nombre réduit de pièces. Par majoritairement, on entend que plus de 90% en poids du plancher 2 est en aluminium ou en alliage d'aluminium.

Le plancher 2 comprend une première plaque supérieure horizontale 16 et une deuxième plaque inférieure 18, disposée à l'écart de, et parallèlement à, la plaque 16. La plaque 16 présente une face supérieure 26 et une face inférieure 28 opposées, de même que la plaque 18 présente une face supérieure 30 et une face inférieure 32 opposées. La plaque 16, et en particulier ses faces 26 et 28, se terminent latéralement par deux bords longitudinaux 22, dont un seul est visible sur les figures 1 et 2, en regard avec la surface de fixation 12, formant chacun une surface verticale s'étendant dans un plan longitudinal, et entre lesquels s'étend le corps de la plaque 16. De même, la plaque 18, et en particulier ses faces 30 et 32, se termine latéralement par deux bords longitudinaux 24, dont la surface s'étend dans le même plan que celle des bords longitudinaux 22 correspondants de la plaque 16.

Deux méplats longitudinaux 34 sont ménagés dans la face supérieure 26, chacun à partir de l'un des bords 22, jusqu'à un chanfrein longitudinal 36 de la face supérieure 26 de la première plaque supérieure 16. Dans l'exemple de la figure 2, le chanfrein 36 définit un angle α36 égal à environ 35°, l'angle α36 étant mesuré par rapport à un plan parallèle à la surface du bord 22. La face supérieure 26 comprend également une partie centrale 38 sensiblement plane délimitée par les deux chanfreins 36. De même, deux méplats longitudinaux 40 sont ménagés dans la face inférieure 32 de la deuxième plaque inférieure 18, chacun à partir de l'un des bords 24, jusqu'à un chanfrein longitudinal 42 de la face inférieure 32. Dans l'exemple de la figure 2, le chanfrein 42 définit un angle α42 égal à la valeur de l'angle α36, l'angle α42 étant mesuré par rapport à un plan vertical parallèle à la surface du bord 24. La face inférieure 32 comprend également une partie centrale 44 sensiblement plane délimitée par les deux chanfreins 42.

La face inférieure 28 de la première plaque supérieure 16 comprend une partie centrale 48 et deux parties latérales 46 s'étendant de part et d'autre de la partie centrale 48 jusqu'aux bords longitudinaux 22. Chaque partie latérale 46 est en regard, c'est-à-dire à l'opposé, de l'un des méplats 34, et s'étend, selon une direction opposée au bord 22, au-delà du méplat 34 correspondant. La partie centrale 48 s'étend dans un plan intermédiaire P48 disposé entre un plan supérieur P38 défini par la partie centrale 38 de la face supérieure 26 et un plan de méplat P34 défini par le méplat longitudinal 34. En d'autres termes, la profondeur du méplat 34 est plus importante que l'épaisseur d'une zone centrale, délimitée par les parties centrales 38 et 48 des faces 26 et 28 de la plaque 16, ce qui permet d'optimiser la masse du plancher 2 tout en lui conférant une résistance mécanique élevée. Dans l'exemple des figures 1 et 2, la distance verticale D38 entre les plans P38 et P48 est de 2,8 mm, alors que la distance verticale D34 entre les plans P38 et P46 est de 4 mm.

La face supérieure 30 comprend une partie centrale 50 et deux parties latérales 52 s'étendant de part et d'autre de la partie centrale 50 jusqu'aux bords longitudinaux 24. Chaque partie latérale 52 est en regard, c'est-à-dire à l'opposé, de l'un des méplats 40, et s'étend, selon une direction opposée au bord 24, au-delà du méplat 40 correspondant. La partie centrale 50 s'étend dans un plan intermédiaire P50 disposé entre un plan inférieur P44 défini par la partie centrale 44 de la face inférieure 32 et un plan de méplat P40 défini par le méplat longitudinal 40. En d'autres termes, la profondeur du méplat 40 est plus importante que l'épaisseur d'une zone centrale, délimitée par les parties centrales 44 et 50 des faces 30 et 32 de la plaque 18, ce qui permet d'optimiser la masse du plancher 2 tout en lui conférant une résistance mécanique élevée.

Le plancher 2 comprend deux âmes longitudinales 54 disposées à proximité des bords longitudinaux 22 et 24, dont une seule est visible sur les figures 1 et 2. Chaque âme longitudinale 54 relie entre elles les plaques 16 et 18. En particulier, chaque âme longitudinale 54 s'étend dans un plan perpendiculaire aux plans P34 et P40 des méplats et fait saillie à partir de la partie latérale 46 de la face inférieure 28 jusqu'à la partie latérale 52 en regard de la face supérieure 30. Chaque âme longitudinale 54 s'étend donc dans une position intermédiaire entre un plan vertical P36 défini par la base des chanfreins 36 et un plan vertical P22 défini par les bords 22 et 24. Les âmes 54 viennent de matière avec les plaques 16 et 18.

De façon connue en soi, la face inférieure 28 est reliée à la face supérieure 30 par des voiles obliques 20 de rigidification du plancher 2, qui sont venus de matière avec les plaques 16 et 18. Les voiles obliques 20 sont disposés entre les deux âmes longitudinales 54. En variante, le plancher 2 est dénué de voiles obliques, et comprend, à la place, d'autres moyens de rigidification, ou est dénué de moyens de rigidification.

On comprend qu'une partie extrémale du plancher 2, incluant les méplats 34 et 40, l'âme 54, les bords 22 et 24 est symétrique par rapport à un plan de symétrie P2 défini à équidistance des plaques 16 et 18.

Le plancher 2 est assemblé avec les brancards 10 par l'intermédiaire de quatre lattes longitudinales en alliage d'acier, deux lattes 56 et 58 seulement étant visibles aux figures 1 et 2. Les deux lattes longitudinales 56 sont fixées à plat respectivement sur les méplats 34 et les deux lattes longitudinales 58 sont fixées à plat respectivement sur les méplats 40. Chaque latte 56 et 58 comprend une face d'appui 60, qui est en appui contre le méplat 34 ou 40 concerné, et une face libre 62 opposée. Chaque latte 56 et 58 est délimitée transversalement par un bord interne longitudinal 64 et un bord externe longitudinal 66 terminant les faces 60 et 62. Pour chaque latte 56 ou 58, la face d'appui 60 recouvre le méplat 34 ou 40, de sorte que le bord interne 64 est en contact avec le chanfrein 36 ou 42 respectivement. Chaque latte 56 ou 58 s'étend au-delà du bord 22 ou 24 concerné, de sorte qu'une partie de chaque latte 56 et 58 dépasse du plancher 2, au-delà du plan P22.

Chaque latte 56 et 58 est solidaire du plancher 2 par l'intermédiaire de sa face d'appui 60, laquelle est soudée au méplat 34 ou 40 contre lequel elle est en appui, à l'aide d'une soudure S par friction-fusion. Pour réaliser cette soudure S par friction-fusion, un outil tournant 61 de friction-fusion est mis en appui et en rotation sur la face libre 62 de la latte longitudinale 56 ou 58 concernée, de manière à chauffer par friction cette latte 56 ou 58, de sorte que la chaleur de friction est transmise au plancher 2 au travers de la latte 56 ou 58 concernée, au niveau du méplat longitudinal 34 ou 40 concerné, ce qui entraîne un soudage de l'alliage d'acier de la latte 56 ou 58 avec l'alliage d'aluminium du plancher 2. En pratique, on applique l'outil 61 contre la latte 56 ou 58 avec un effort F61 prédéterminé, la force F61 étant dirigée selon un axe X61 de l'outil 61, cet axe X61 étant perpendiculaire au méplat 34 ou 40 concerné lorsque l'outil 61 est en contact avec la latte 56 ou 58. L'outil 61 est mis en rotation autour de l'axe X61. L'outil 61 est déplacé le long de la latte 56 ou 58, tout en étant en rotation autour de l'axe X61 et en appui avec l'effort F61, pour créer une soudure S continue voire discontinue. La présence de l'âme 54 permet au plancher 2 de résister aux efforts en jeu lors de cette opération de soudage S par friction-fusion. En l'espèce, l'âme 54 est disposée en regard de chaque latte 56 et 58, c'est-à-dire en dessous, de l'autre côté de la plaque 16 ou 18 concernée, de façon à améliorer la résistance en flexion de cette plaque 16 ou 18. Ainsi, pour réaliser la soudure S, l'outil 61 est positionné à l'aplomb de l'âme 54, c'est-à-dire dans l'axe de cette dernière. En d'autres termes, l'axe X61 est aligné avec un plan médian de l'âme 54, comme cela est illustré à la figure 2.

L'outil 61 présente une extrémité, appliquée sur la latte 56 ou 58, dont la forme est cylindrique à base circulaire autour de l'axe X61. On prévoit que cette extrémité présente un diamètre Φ61 suffisamment élevé pour que la surface de contact entre l'outil 61 et la latte 56 ou 58 dépasse du bord 22 ou 24 du méplat 34 ou 40 concerné, afin de garantir que la soudure S par friction-fusion s'étende au moins jusqu'au bord 22 ou 24 concerné, voire au-delà du bord 22 ou 24, afin de garantir l'étanchéité de la soudure S au niveau de la face d'appui 60. En d'autres termes, l'outil 61 est traversé par le plan P22 lors de la soudure S. Dans l'exemple illustré sur la figure 2 :
- la largeur L65 des lattes 56 et 58, mesurée entre les bords 64 et 66 parallèlement à la face d'appui 60, est de 40 mm,
- le diamètre Φ61 est par exemple compris entre 10 et 25 mm,
- l'outil dépasse de 1 à 2 mm du bord 22.

On prévoit que les lattes 56 et 58 sont suffisamment fines pour faciliter la transmission de chaleur jusqu'au plancher 2 lors du soudage par friction-fusion. Dans l'exemple de la figure 2, l'épaisseur E62 de la latte, mesurée entre la face libre 62 et la face d'appui 60, est de 4 mm. En pratique, l'épaisseur E62 est égale à la distance D34, de sorte que la face 62 est coplanaire avec la partie centrale 38 de la face supérieure 26.

Chaque bord externe longitudinal 66 est chanfreiné afin d'accueillir une soudure S' acier sur acier, pour fixer la latte 56 ou 58 concernée à la surface de fixation 12. Le chanfrein du bord 66 est ménagé du côté de la face libre 62, et présente un angle α66 de 40° par rapport à un plan orthogonal à la face d'appui 60. Chaque latte longitudinale 56 et 58 présente une partie en surépaisseur 70, en saillie à partir de la face libre 62, qui s'étend à partir du bord externe longitudinal 66 chanfreiné. La présence de cette partie en surépaisseur 70 garantit la solidité et la durabilité de la soudure acier sur acier. Dans l'exemple de la figure 2, les lattes 56 et 58 présentent une épaisseur E70 de 5 mm, mesurée entre la partie en surépaisseur 70 de la face libre 62 et la face d'appui 60.

Le chanfrein du bord externe longitudinal 66 pour la soudure S' est éloigné à une distance suffisante du bord longitudinal 22, et donc de la soudure S, pour éviter un échauffement néfaste à la tenue mécanique de cette soudure S, et notamment pour éviter tout risque de délaminage de cette dernière. Cette distance garantit la solidité et la durabilité de la soudure S. Pour la clarté du dessin, les cordons de soudure acier sur acier S' ne sont représentés que sur la figure 1.

En variante, les lattes 56, 58 ne sont pas fixées sur la surface 12 par soudage, mais le sont par tout autre moyen approprié, par exemple un rivetage. Dans ce cas, la forme du brancard 10 est modifiée pour recevoir les rivets.

Chaque bord interne longitudinal 64 est également chanfreiné, de façon à former une rainure à section en V avec le chanfrein 36 ou 42 adjacent. L'inclinaison du chanfrein 64 est égale à celle des chanfreins 36 ou 42 adjacent. La rainure à section en V ainsi formée est comblée par une garniture G d'étanchéité, représentée seulement à la figure 1, pour la clarté du dessin, du genre mastic, pour garantir l'étanchéité de la soudure S par friction-fusion.

En variante, le plancher 2 n'est pas obtenu par extrusion, mais par un autre procédé de fabrication, de même que le brancard 10 et l'élément de support 110.

En variante, une seule des lattes 56 ou 58 est fixée sur le plancher 2 à l'aide d'une soudure S par friction-fusion, les autres lattes étant fixées à l'aide d'un autre procédé approprié, tel qu'un rivetage.

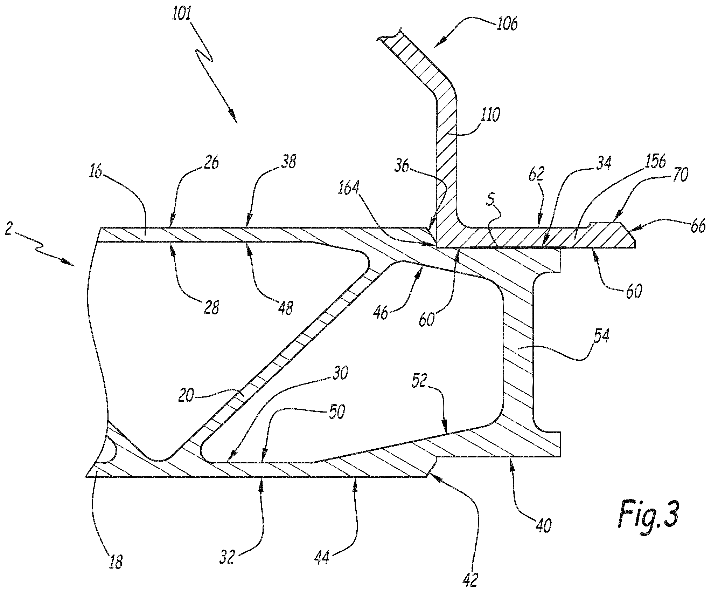

Une structure de caisse 101 conforme au deuxième mode de réalisation de l'invention représentée à la figure 3 est décrite dans ce qui suit.

Cette structure de caisse 101 présente des caractéristiques similaires avec la structure de caisse 1 des figures 1 et 2. La description qui suit est donc centrée sur les différences entre ce deuxième mode de réalisation de la figure 3 et le premier mode de réalisation des figures 1 et 2. En particulier, les numéros de référence de la figure 3 qui sont communs avec ceux des figures 1 et 2 font référence aux mêmes caractéristiques et objets qui ont été décrits ci-avant pour le premier mode de réalisation, ces caractéristiques et objets se retrouvant dans le deuxième mode de réalisation.

La structure de caisse 101 de la figure 3 comprend un plancher 2 identique à celui décrit précédemment, une latte longitudinale 156 et un châssis 106, qui diffèrent des lattes 56 et 58 et du châssis 6 décrits précédemment, en ce que la latte longitudinale 156 vient de matière avec un élément de support 110 du châssis 6 et appartient donc à cet élément de support 110. En conséquence, le plancher 2 est directement fixé sur l'élément de support 110 à l'aide d'une soudure S par friction-fusion, l'élément de support 110 présentant une partie en forme de latte longitudinale 156.

La latte longitudinale 156 présente une face libre 62 avec une partie en surépaisseur 70, un bord externe 66 et une face d'appui 60 similaires à ceux du premier mode de réalisation des figures 1 et 2. La soudure S par friction-fusion de la latte 156 sur le plancher 2 peut donc être effectuée de la même façon, avec un outil similaire, que celle de la latte 56 sur le plancher 2 du premier mode de réalisation.

Le bord externe 66 est optionnellement soudé ou fixé à un élément de support, non illustré, en alliage d'acier, du châssis 106.

La latte longitudinale 156 est prolongée, à partir d'un bord longitudinal 164 de la face libre 62 qui est opposé au bord externe 66, par l'élément de support 110, qui fait saillie vers le haut à partir de la face libre.

En variante, le plancher 2 peut être remplacé par tout élément d'équipement en alliage d'aluminium de la structure 1, le brancard 10 et l'élément de support 110 pouvant être remplacés par tout élément de support en alliage d'acier de la structure de caisse. Par exemple, l'élément d'équipement en alliage d'aluminium peut être un pavillon appartenant à la structure 1 ou un platelage intermédiaire pour former un niveau intermédiaire dans le cas d'une structure à plusieurs niveaux de planchers.

Par ailleurs, l'élément de support en alliage d'acier peut être formé par un pavillon en alliage d'acier, un plancher en alliage d'acier, ou un platelage en alliage d'acier. En variante, l'élément d'équipement est fixé à l'élément de support à l'aide d'une seule latte 56 ou 58, et d'une seule soudure S par friction-fusion.

Les différents modes de réalisation et variantes décrits ci-avant peuvent être combinés pour créer de nouveaux modes de réalisation.

## Revendications

1. Structure (1; 101) de caisse pour un véhicule sur rails, la structure de caisse comprenant :
- un châssis (6; 106), qui comprend au moins un élément de support (10; 110) réalisé au moins majoritairement en alliage d'acier, et
- au moins un élément d'équipement (2), réalisé au moins majoritairement en alliage d'aluminium, qui comprend au moins une première plaque (16, 18) présentant au moins un bord longitudinal (22, 24) et une première face (26, 32) délimitée par le bord longitudinal,
la structure (1; 101) de caisse étant **caractérisée en ce qu'**elle comprend en outre au moins une latte longitudinale (56, 58; 156) en alliage d'acier, laquelle est solidaire de l'élément de support (10; 110), la latte longitudinale étant fixée à plat sur la première face (26, 32), à l'aide d'une soudure (S) par friction-fusion.

2. Structure (1; 101) de caisse selon la revendication 1, **caractérisée en ce qu'**un méplat longitudinal (34, 40) est ménagé dans la première face (26, 32), sur une partie seulement de cette première face (26, 32) s'étendant à partir du bord longitudinal (22, 24), la latte longitudinale (56, 58; 156) étant fixée sur l'élément d'équipement (2) à plat contre le méplat longitudinal.

3. Structure (1; 101) de caisse selon l'une quelconque des revendications précédentes, **caractérisée en ce que** deux plaques (16, 18) sont prévues, dont la première plaque (16), qui comprend une deuxième face (28, 30) opposée à la première face (26, 32), et dont une deuxième plaque (18), parallèle à la première plaque, et **en ce que** l'élément d'équipement (2) comprend une âme longitudinale (54), qui fait saillie à partir d'une partie latérale (46, 52) de la deuxième face (28, 30), la partie latérale s'étendant à partir du bord longitudinal (22, 24) et étant en regard avec la latte longitudinale (56, 58; 156), l'âme reliant la première plaque à la deuxième plaque.

4. Structure (101) de caisse selon l'une quelconque des revendications précédentes, **caractérisée en ce que** la latte longitudinale (156) vient de matière avec l'élément de support (110), et appartient à ce dernier.

5. Structure (1; 101) de caisse selon l'une quelconque des revendications 1 à 3, **caractérisée en ce que** la latte longitudinale (56, 58; 156) présente un bord externe longitudinal (66) par l'intermédiaire duquel la latte longitudinale est soudée sur l'élément de support (10; 110).

6. Structure (1; 101) de caisse selon la revendication 5, **caractérisée en ce que** la latte longitudinale (56, 58; 156) présente une partie (70) en surépaisseur qui s'étend à partir du bord externe longitudinal (66).

7. Structure (1) de caisse selon l'une quelconque des revendications précédentes, **caractérisé en ce que** la latte longitudinale (56, 58; 156) présente un bord interne longitudinal (64) chanfreiné, la structure de caisse comprenant une garniture d'étanchéité rapportée contre le bord interne longitudinal.

8. Structure (1) de caisse selon l'une quelconque des revendications précédentes, **caractérisée en ce que** l'élément de support (10) forme un brancard et **en ce que** l'élément d'équipement (2) forme un plancher.

9. Procédé de fabrication d'une structure (1; 101) de caisse conforme à l'une quelconque des revendications précédentes, ce procédé de fabrication comprenant une étape de fixation de la latte longitudinale (56, 58; 156) sur la première face (26, 32) par soudage (S) par friction-fusion effectué au travers de la latte longitudinale par application d'un outil tournant (61) de friction-fusion sur une face libre (62) de la latte longitudinale, la face libre étant opposée à une face d'appui (60) de la latte longitudinale contre la première face (26, 32).

10. Procédé de fabrication selon la revendication 9, **caractérisé en ce que** l'outil (61) de friction-fusion est appliqué sur la face libre (62) en regard de la première face (26, 32), en dépassant au-delà du bord longitudinal (22, 24).

## Patentansprüche

1. Karosserie-Struktur (1, 101) für ein Fahrzeug auf Schienen, wobei die Karosserie-Struktur aufweist:
- einen Rahmen (6, 106), welcher mindestens ein Halteelement (10, 110) aufweist, welches zumindest überwiegend aus einer Stahllegierung hergestellt ist, und
- mindestens ein Ausrüstungselement (2), welches zumindest überwiegend aus einer Aluminiumlegierung hergestellt ist und welches zumindest eine erste Platte (16, 18) aufweist, welche zumindest einen Längsrand (22, 24) und eine erste Fläche (26, 32), welche von dem Längsrand begrenzt wird, hat,
wobei die die Karosserie-Struktur (1, 101) **dadurch gekennzeichnet ist, dass** sie ferner zumindest eine Längsleiste (56, 58, 156) aus einer Stahllegierung aufweist, welche mit dem Haltelement (10, 110) fest verbunden ist, wobei die Längsleiste an der ersten Fläche (26, 32) mittels eines Schweißens (S) mittels Friktionsfusion eben befestigt ist.

2. Karosserie-Struktur (1, 101) gemäß Anspruch 1, **dadurch gekennzeichnet, dass** eine Längsabflachung (34, 40) in der ersten Fläche (26, 32) nur an einem Abschnitt dieser ersten Fläche (26, 32) bereitgestellt ist, welcher sich ausgehend vom Längsrand (22, 24) erstreckt, wobei die Längsleiste (56, 58, 156) am Ausrüstungselement (2) eben gegen die Längsabflachung befestigt ist.

3. Karosserie-Struktur (1, 101) gemäß irgendeinem der vorherigen Ansprüche , **dadurch gekennzeichnet, dass** zwei Platten (16, 18) vorgesehen sind, von denen die erste Platte (16) eine zweite Fläche (28, 30) aufweist, welche entgegengesetzt zur ersten Fläche (26, 32) ist, und von denen eine zweite Platte (18) parallel zur ersten Platte ist, und dadurch, dass das Ausrüstungselement (2) einen Längssteg (54) aufweist, welcher ausgehend von einem Lateralabschnitt (46, 52) der zweiten Fläche (28, 30) vorsteht, wobei sich der Lateralabschnitt ausgehend vom Längsrand (22, 24) erstreckt und gegenüberliegend zur Längsleiste (56, 58, 156) ist, wobei der Steg die erste Platte mit der zweiten Platte verbindet.

4. Karosserie-Struktur (101) gemäß irgendeinem der vorherigen Ansprüche, **dadurch gekennzeichnet, dass** die Längsleiste (156) einstückig mit dem Halteelement (110) ist und zu diesem letzteren gehört.

5. Karosserie-Struktur (1, 101) gemäß irgendeinem der Ansprüche 1 bis 3, **dadurch gekennzeichnet, dass** die Längsleiste (56, 58, 156) einen äußeren Längsrand (66) hat, mittels dessen die Längsleiste an das Halteelement (10, 110) geschweißt ist.

6. Karosserie-Struktur (1, 101) gemäß Anspruch 5, **dadurch gekennzeichnet, dass** die Längsleiste (56, 58, 156) einen Abschnitt (70) mit Überhöhung hat, welcher sich ausgehend vom äußeren Längsrand (66) erstreckt.

7. Karosserie-Struktur (1) gemäß irgendeinem der vorherigen Ansprüche, **dadurch gekennzeichnet, dass** die Längsleiste (56, 58, 156) einen angefasten inneren Längsrand (64) hat, wobei die Karosserie-Struktur eine Abdichtung aufweist, welche gegen den inneren Längsrand angelegt ist.

8. Karosserie-Struktur (1) gemäß irgendeinem der vorherigen Ansprüche, **dadurch gekennzeichnet, dass** das Halteelement (10) einen Träger bildet, und dadurch, dass das Ausrüstungselement (2) einen Boden bildet.

9. Verfahren zum Herstellen einer Karosserie-Struktur (1, 101), welche gemäß einem der vorherigen Ansprüche ist, wobei dieses Verfahren zum Herstellen aufweist einen Schritt des Befestigens der Längsleiste (56, 58, 156) an der ersten Fläche (26, 32) mittels Schweißens (S) mittels Friktionsfusion, welches quer zur Längsleiste durchgeführt wird mittels Anlegens eines Drehwerkzeugs (61) für Friktionsfusion an eine freie Fläche (62) der Längsleiste, wobei die freie Fläche entgegengesetzt zu einer Fläche des Anlegens (60) der Längsleiste gegen die erste Fläche (26, 32) ist.

10. Verfahren zum Herstellen gemäß Anspruch 9, **dadurch gekennzeichnet, dass** das Werkzeug (61) für Friktionsfusion an die freie Fläche (62) gegenüber der ersten Fläche (26, 32) angelegt wird, welche über den Längsrand (22, 24) hinausragt.

## Claims

1. Body structure (1; 101) for a railway vehicle, wherein the body structure comprises:
- a frame (6; 106), which comprises at least one support element (10; 110) made at least predominantly of steel alloy, and
- at least one equipment element (2), made at least predominantly of aluminum alloy, and comprising at least a first plate (16, 18) comprising at least one longitudinal edge (22, 24) and a first face (26, 32) delimited by the longitudinal edge,
wherein the body structure (1; 101) is **characterized in that** it further comprises at least one longitudinal steel batten (56, 58; 156) which is integral with the support element (10; 110), and wherein the longitudinal batten is fixed flat on the first face (26, 32) by means of friction melt bonding (S).

2. Body structure (1; 101) according to claim 1, **characterized in that** a longitudinal flat spot (34, 40) is provided in the first face (26, 32) on only part of this first face (26, 32) extending from the longitudinal edge (22, 24), wherein the longitudinal batten (56, 58; 156) is fixed to the flat element (2) flat against the longitudinal flat spot.

3. Body structure (1; 101) according to one of the preceding claims, **characterized in that** two plates (16, 18) are provided, wherein the first plate (16) which comprises a second face (28, 30) opposite the first face (26, 32), and a second plate (18) parallel to the first plate, and **in that** the equipment element (2) comprises a longitudinal web (54) which protrudes from a lateral portion (46, 52) of the second face (28, 30), wherein the lateral portion extends from the longitudinal edge (22, 24) with respect to the longitudinal batten (56, 58; 156), and wherein the web connects the first plate to the second plate.

4. Body structure (101) according to one of the preceding claims, **characterized in that** the longitudinal batten (156) is integral with, and belongs to, the support element (110).

5. Body structure (1; 101) according to one of the claims 1 to 3, **characterized in that** the longitudinal batten (56, 58; 156) has a longitudinal outer edge (66) by means of which the longitudinal batten is welded on the support element (10; 110).

6. Body structure (1; 101) according to claim 5, **characterized in that** the longitudinal batten (56, 58; 156) has a thickened portion (70) extending from the longitudinal outer edge (66).

7. Body structure (1) according to one of the preceding claims, **characterized in that** the longitudinal batten (56, 58; 156) has a chamfered longitudinal internal edge (64), wherein the body structure comprises a sealing gasket applied against the longitudinal internal edge.

8. Body structure (1) according to one of the preceding claims, **characterized in that** the support element (10) forms a truss and **in that** the equipment element (2) forms a floor.

9. Method of manufacturing a body structure (1; 101) according to one of the preceding claims, wherein the method of manufacturing comprises a step of fixing the longitudinal batten (56, 58; 156) on the first face (26, 32) by means of friction melt bonding (S) through the longitudinal batten by applying a rotating friction melt bonding tool (61) to a free surface (62) of the longitudinal batten, wherein the free face lies opposite a support face (60) of the longitudinal batten against the first face (26, 32).

10. Manufacturing method according to claim 9, **characterized in that** the friction melt bonding (61) is applied to the free face (62) facing the first face (26, 32) beyond the longitudinal edge (22, 24).
